# EUROPEAN PATENT APPLICATION

(11) **EP 2 497 709 A1**
(43) Date of publication of application: **12.09.2012**
(21) Application number: 10827941.5
(22) Date of filing: 11.03.2010
(51) Int. Cl.: B63H 1/20

(54) **VESSEL PROPULSION DEVICE**

(30) Priority: 05.11.2009 ES 200930605 U
(71) Applicant: Gonzalez Abal, Pablo Alfonso, 36791 Curras, Tomiño, Pontevedra (ES)
(72) Inventor: Gonzalez Abal, Pablo Alfonso, 36791 Curras, Tomiño, Pontevedra (ES)
(74) Representative: Pons Ariño, Angel
(86) International application number: PCT/ES2010/070146
(87) International publication number: WO 2011/054986

(57) **Abstract**

The invention in principle comprises a propeller formed by independent blades that incorporate a seating base via which the blades are secured so as to correspond to an end portion of a propulsion shaft of the vessel. The invention is characterized in that the end portion (3) of the propulsion shaft (4) comprises a prismatic structure, on the planar faces whereof rest, in a complementary manner, other, facing planar faces of the heads (12) for seating the independent blades (2), all planar faces having facing pairs of keyways (10-10') in which a key (11) for guiding and positioning the independent blades (2) is inserted, which blades are secured by means of transverse screws (7) that secure the heads (12) for seating the independent blades (2) to the lateral faces (6) of the end portion (3) of the propulsion shaft (4).

## Description

### Object of the invention

The present invention, according to what is expressed in the heading of this specification, relates to a vessel propulsion device to provide movement to ships and which usually has a propeller diameter comprised between 1.200 mm and 7.500 mm.

Therefore, the object of the invention is to achieve a shaft-propeller propulsion equipment in which the blades are interchangeable and can be attached to the propulsion shaft itself by means of transverse screws and without the need of adjustment between male cones (shaft) and female cones (propeller). This assembly, thus, eliminates the stress normally found in the hydraulic adjustment of cones, besides increasing the adjustments of the set and saving assembly, disassembly and adjustment time.

The invention, therefore, falls within the scope of naval industry, and more particularly within the scope of machinery and accessories for ship movement and/or naval propulsion.

### Background of the invention

Commonly, fixed pitch propulsion with interchangeable blades is formed by the functional combination of a shaft, a hub, several blades and a series of attachment elements. Through this hub, the propeller receives the movement with the help of the corresponding transmission and the corresponding engine. In turn, a plurality of blades distributed around its periphery is attached to this hub.

To date, attaching the propeller to the shaft is carried out by an adjustment between the cones, male and female, in addition to the attachment of the blades to the hub, this has several drawbacks that are mainly focused on the following aspects:
- To manufacture the hub, a conical template that simulates the shaft of the ship is needed in order to ensure a previously correct adjustment before assembly. With the new invention, this essential tool in conventional design is not necessary.
- The great difference between conical templates and shafts involve a great deal of complex machinery and tools in the conventional system manufacture. The standardization and simplicity of the system allows mass-producing and a reduction in response time.
- In many occasions, when substituting the propeller, the cone of the shaft must be mechanized in order to ensure the adjustment. The repetition of this mechanization forces to disassemble the shaft and assemble it once again. In the proposed system of the invention, the blades are directly attached to a planar surface, so that the above mentioned conventional process will not be necessary.
- The attachment of the propeller to the shaft is commonly carried out by hydraulic draft, which needs holes for the passage of oil and hose connection and it introduces stress in the assembly, besides needing very expensive pressure equipment.
On the other hand, Utility Models No. 200900787 and 200930479, both property of the same applicant of the invention at hand, are well known.

### Description of the invention

In order to achieve the objectives and avoid the aforementioned drawbacks, the invention proposes a new vessel propulsion device that in principle has independent blades attached to the end portion of a propulsion shaft.

It is characterized in that the actual propulsion shaft is the element to which the blades are attached, also characterized in that the attachment of the blades is carried out by a direct screwing to the shaft, which adopts a prismatic configuration, whose number of faces coincides with the number of blades that form the propeller (generally four) having said lateral faces a pair of facing keyways, one in the blade and the other one in the hub and a key shared by both. The blades are directly attached to the shaft by means of a series of transverse screws.

The described set is complemented by a front hood which, once the blades are mounted on the shaft, is screwed to the latter and easily detachable.

The keyways allow for a quick change of the blades, simply by unscrewing the corresponding screws securing the position of the blades in each assembly.

Since 95 % of propeller's repair operations have the blades as an objective and barely 5 % the hub, upon the propeller having this set of detachable blades, said blades barely need repairing as they are replaceable.

In the event of damage to any of the blades, these can be replaced without turning to a dry dock or a dockyard, since the disassembly and assembly process is extremely simple and can be performed with the ship afloat.

The blades can easily be assembled "in situ", which positively affects transportation, storage and manipulation costs with regards to a standard fixed pitch propeller.

The design avoids the adjustment between the hub and the shaft of the propeller because, in this case, it is the shaft itself that directly houses the blades. With this, the adjustment between the male cone (shaft) and the female cone (propeller), which is inevitable in the conventional assembly, will not be necessary in any case.

Below, in order to help to a better understanding of this specification and as an integral part thereof, a set of drawings is attached where, with an illustrative and non-limiting character, the object of the invention has been represented:

### Brief description of the drawings

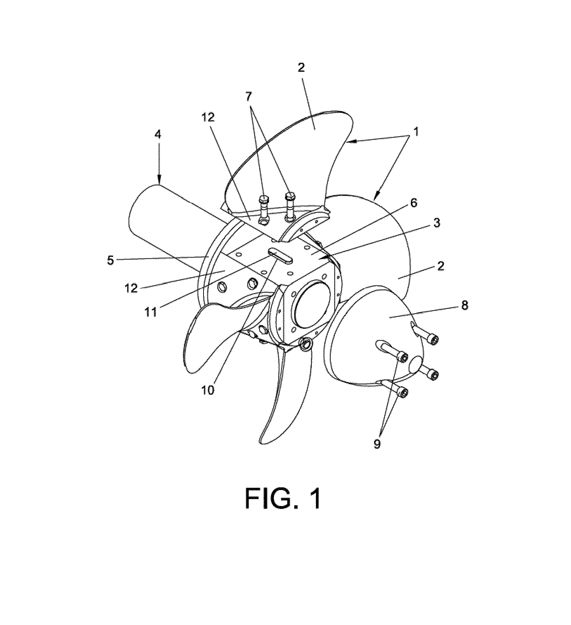

Figure 1.- Shows a perspective view of the vessel propulsion device, object of the invention.

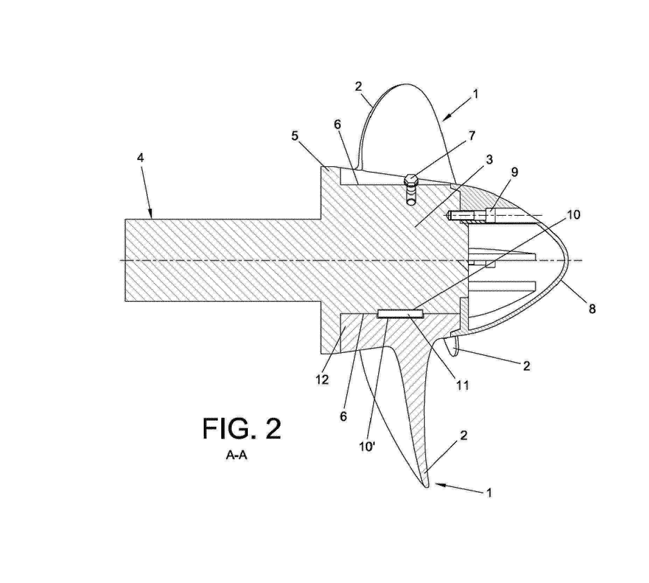

Figure 2.- Shows a longitudinal section view of the device of the invention.

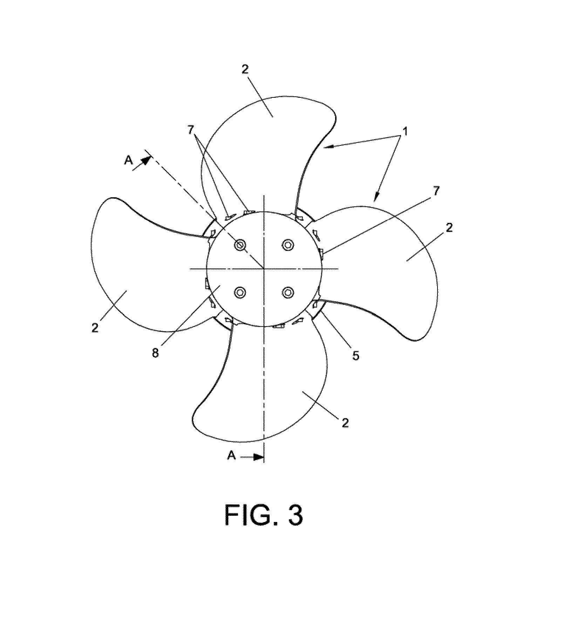

Figure 3.- Shows a front view of the vessel propulsion device.

### Description of a preferred embodiment

Taking into consideration the numbers adopted in the figures, the vessel propulsion device is determined from a propeller (1) provided with four independent blades (2), which are radially attached in correspondence with an end portion (3) of the propulsion shaft (4), said end portion (3) comprising a prismatic-quadrangular configuration, also incorporating a front flange (5) adjacent to the propulsion shaft (4) itself and at the same time the independent blades (2) are axially adjusted in one direction facing the flange.

In turn, the end portion (3) of the propulsion shaft (4) is attached to each of the independent blades (2) of the propeller (1), said attachment corresponding with each of the lateral faces (6) of the prismatic-quadrangular end portion (3), so that the attachment of the independent blades (2) is secured by means of transverse screws (7) complementing said attachment of the independent blades (2) by the incorporation of a front hood (8) axially attached by other longitudinal screws (9).

Thus, a complete axially and radially adjusted set is achieved, forming a hydrodynamic geometry.

Thereby in the new invention, the end portion (3) of the propulsion shaft (4) has the particularity of incorporating one or several keyways (10) with their corresponding key (11) on each of its lateral faces (6) in a parallel arrangement to its propulsion shaft (4) to guide the blades (2) and secure the assembly in its correct position. Obviously, in order to guide the independent blades (2) it features other complementary keyways (10') facing the latter (10) in its head (12) and on which, complementary parts of the aforementioned keys (11) are adjusted.

Finally, on the end of the propulsion shaft (4) and opposite the front flange (5) which tops the set, i.e. on the attack base for the independent blades (2), the front hood (8) is mounted, so that after the independent blades (2) are assembled, said front hood (8) is firmly attached to the propulsion shaft (4) of the corresponding vessel by directly screwing it to the aforementioned propulsion shaft (4) or by using all the longitudinal screws (9), the whole assembly being compact and immobilizing the heads (12) of said independent blades (2) in an axial direction, in collaboration with the front flange (5) of the propulsion shaft (4) itself.

Logically, in the head (12) of each blade a planar surface is established for a perfect adaptation to the lateral face thereof and the corresponding to the propulsion shaft.

Another possibility is that the independent blades (2) are attached using the transverse screws (7) without the axial retention of the front flange (5) and the front hood (8), so that this could be integrated in the propulsion shaft (4) itself, i.e., the manufacture of the hood and its attaching screws could be avoided. Thus, several parts and their assembly would be eliminated.

## Claims

1. Vessel propulsion device, which comprising a propeller formed by independent blades that incorporate a seating base through which the blades are attached in correspondence with an end portion of a propulsion shaft of the vessel, is **characterized in that** the end portion (3) of the propulsion shaft (4) comprises a prismatic structure over whose planar faces, other planar faces facing the heads (12) of the independent blades (2) complementarily lean, both planar faces provided with pairs of facing keyways (10 - 10') where a guiding and positioning key (11) for the independent blades (2) is inserted, these are attached by transversal screws (7) that secure the heads (12) of the independent blades (2) against the lateral faces (6) of the end portion (3) of the propulsion shaft (4).

2. Vessel propulsion device, according to the previous claim, **characterized in that** it includes axial retention means for the independent blades (2) with respect to the propulsion shaft (4), consisting of a front flange (5) adjacent to the propulsion shaft (4) itself and a front hood (8) facing said front flange (5).

3. Vessel propulsion device, according to the previous claim, **characterized in that** the front hood (8) is axially attached in correspondence with the free end of the end portion (3) of the propulsion shaft (4) by means of longitudinal screws (9).

4. Vessel propulsion device, according to claim 2, **characterized in that** the front hood (8) is directly attached by screwing it in correspondence with the free end of the end portion (3) of the propulsion shaft (4).

5. Vessel propulsion device, according to claim 1, **characterized in that** it incorporates a front hood which is an integral part of the propulsion shaft (4).
